(19) **Europäisches Patentamt / European Patent Office / Office européen des brevets**

(11) **EP 4 357 815 A1**

(12) # EUROPEAN PATENT APPLICATION

(43) Date of publication:
**24.04.2024 Bulletin 2024/17**

(21) Application number: **22202855.7**

(22) Date of filing: **20.10.2022**

(51) International Patent Classification (IPC):
**G01S 19/09** $^{(2010.01)}$     *G01S 19/43* $^{(2010.01)}$
**G01S 19/21** $^{(2010.01)}$

(52) Cooperative Patent Classification (CPC):
**G01S 5/0036; G01S 19/09;** G01S 19/215;
G01S 19/43

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **u-blox AG**
**8800 Thalwil (CH)**

(72) Inventors:
• **LENZARINI, Davide**
  **Horgen (CH)**
• **SOLITO, Giovanni**
  **Horgen (CH)**
• **BARTLETT, David**
  **St. Ives (GB)**

(74) Representative: **Elkington and Fife LLP**
**Prospect House**
**8 Pembroke Road**
**Sevenoaks, Kent TN13 1XR (GB)**

(54) **LOCALIZED REMOTE GNSS POSITIONING**

(57)     Methods and apparatus are disclosed for gathering raw GNSS phase measurements at a GNSS receiver and making them available to a remote device for processing to calculate a position fix for the GNSS receiver. The measurements are arranged in a first subset and a second subset. First bits of the first subset and second bits of the second subset are embedded in one or more data messages for transmission to the remote device. The first bits include a coarse part and a fine part of the respective phase measurement. In contrast, the second bits describe at least a portion of the fine part, but none of the coarse part, of the respective phase measurement.

| | |
|---|---|
| Obtain code phase measurements | 310 |
| Obtain quality indicators | 320 |
| Select 1st subset | 330 |
| Write 1st bits | 335 |
| Select 2nd subset | 340 |
| Write 2nd bits | 345 |
| Write timestamp | 350 |
| Write signature | 360 |
| Output data message | 370 |
| Transmit | 380 |

**FIG. 3**

**Description**

FIELD OF THE INVENTION

The present invention relates to Global Navigation Satellite Systems (GNSS). In particular, it relates to methods and apparatus for processing GNSS measurements remotely from the GNSS receiver that made them.

BACKGROUND OF THE INVENTION

Techniques for GNSS positioning are well known in the art. Existing GNSS include the Global Positioning System (GPS), Galileo, GLONASS, and BeiDou Navigation Satellite System (BDS), also referred to herein simply as "BeiDou". Each GNSS comprises a constellation of satellites, also known in the art as "space vehicles" (SVs), which orbit the earth. Each SV transmits one or more satellite signals which may be modulated with a Pseudorandom noise (PRN) code at a certain frequency, for instance 1.023 Mbps for GPS L1/CA, and a navigation data message at a lower frequency, for instance 50 bps for GPS L1/CA. These are received by a GNSS receiver for which it is desired to calculate a position fix. The GNSS receiver can generate a number of code phase, carrier phase and/or Doppler measurements using the signals, to derive information about the distance between the receiver and respective satellites (and/or the rate of change of these distances). When a sufficient number of measurements can be made and the navigation data messages are processed or GNSS assistance data is available, the receiver's position can then be calculated.

Conventionally, most GNSS receivers have contained all of the hardware and software necessary to calculate a position fix themselves. This is essential for applications such as navigation, where the GNSS receiver needs to determine its position in real-time, without the ability to rely on communication with external processing resources. To improve the accuracy of the positioning calculations as well as their speed (for example, in terms of time to first fix), some form of aiding or assistance may be required. This assistance may be provided to the GNSS receiver via a communications link, such as over a cellular network. If other devices need to know the position of the GNSS receiver, it can transmit its calculated position fix to them via the same cellular network.

However, this conventional model imposes burdens on the GNSS receiver, in terms of the computational resources required for - and energy consumed by - performing the calculations on board, and receiving the assistance data on the cellular downlink.

For other applications (typically those which do not require real-time position updates on board the GNSS receiver), such as asset-tracking, it is also known to shift the computational burden of calculating the position fix to a remote device, such as a server computer. In this case, the GNSS receiver transmits its phase and Doppler measurements to the remote device. This may involve a relatively small data payload. The remote device processes the GNSS measurements to calculate the position fix. Optionally, the remote device may obtain aiding/assistance information, to assist in the calculation.

The latter approach is well suited to energy-constrained internet of things (IoT) applications. It can reduce the amount of data that needs to be transmitted to and from the GNSS receiver (for example, over the cellular communications network or LoRa or Sigfox or a non-terrestrial communications network). No aiding/assistance information needs to be transmitted to the GNSS receiver, since the GNSS receiver is not responsible for the calculation of the position fix. Indeed, if the GNSS receiver is configured to provide position updates according to a fixed schedule (for example, hourly or daily), little or no downstream communication may be necessary from the cellular network (or LoRa or Sigfox or a non-terrestrial communications network) to the GNSS receiver. Furthermore, the quantity of data necessary to transmit the measurements on the uplink, to the remote device, may be relatively modest. The computationally intensive burden of calculating the position fix is no longer borne by the GNSS receiver, meaning that simpler, cheaper, and more power-efficient GNSS receiver devices can be designed.

One example of a system in which the calculation of the position fix is handled remotely from the GNSS receiver is the CloudLocate service, provided by the present applicant.

SUMMARY OF THE INVENTION

In the context of an application in which the position fix is calculated remotely from the GNSS receiver, it would be desirable to use the data payload transmitted by the GNSS receiver as efficiently as possible. That is, it would be desirable to design a system that minimises the amount of data that needs to be transmitted, while maximising the accuracy of the resulting position fix.

Methods and apparatus are disclosed for gathering raw GNSS phase measurements at a GNSS receiver and making them available to a remote device for processing to calculate a position fix for the GNSS receiver. The measurements are arranged in a first subset and a second subset. First bits of the first subset and second bits of the second subset are embedded in one or more data messages for transmission to the remote device. The first bits include a coarse part and a fine part of the respective phase measurement. In contrast, the second bits describe at least a portion of the fine part, but none of the coarse part, of the respective phase measurement.

According to a first aspect of the present disclosure, there is provided a GNSS receiver comprising:

a signal processing unit, configured to make a plurality of phase measurements at a first epoch, each phase measurement being made from a respective different GNSS signal; and
at least one processor, configured to:

select a first subset of the phase measurements;
select a second subset of the phase measurements;
for each phase measurement of the first subset, write first bits of the phase measurement to at least one data message for transmission to a remote device for processing;
for each phase measurement of the second subset, write second bits of the phase measurement to the at least one data message; and
output the at least one data message containing at least the first and the second bits,

wherein the first bits include a coarse part and a fine part of the respective phase measurement, and
wherein the second bits describe at least a portion of the fine part of and none of the coarse part of the respective phase measurement.

Dividing the phase measurements into different subsets and sending different bits for the different subsets can enable better optimisation of the size of the overall transmitted data payload versus the accuracy of the resulting position fix, when calculated by the remote device. For example, knowing the coarse position of the GNSS receiver with an accuracy within 150 km, the coarse part (at least) of the first bits may be usable to calculate an initial position fix with a moderate position uncertainty. The second bits may be usable to calculate a refined position fix, with smaller position uncertainty, when used in conjunction with the first bits. However, the second bits might not be usable by themselves to calculate a position fix (in particular, because they are missing the coarse part of the respective phase measurements in the second subset).

The inventors have recognised that transmitting the coarse part of the phase measurements of the second subset in the at least one data message can lead to unnecessary or undesirable redundancy in the data transmitted. In fact, if the coarse position of the GNSS receiver is known with an accuracy within 150km, the coarse part of the phase measurements of the first subset provides sufficient information to establish the position with moderate position uncertainty (for example, to within 150 m). Once the position has been established to this level of accuracy, the coarse part of any additional phase measurements typically does not reduce the position uncertainty significantly. It is therefore better to use the remaining bits of the data payload transmitted to the remote device to carry the fine part of the phase measurements of the second subset.

The coarse part and fine part are identifiable by reference to the precision with which they establish the range. The coarse part may be associated with a first ranging uncertainty (for example, approximately 150m); the fine part may be associated with a second ranging uncertainty that is smaller than the first (for example, approximately 2.5m or 20m).

In general, if a single band is considered (like L1 or L5 for GPS), the different GNSS signals are transmitted by respective different GNSS satellites (space vehicles). It is anyway also possible, if multiple bands are considered, that different GNSS signals are transmitted by the same GNSS satellite over two different bands (L1 and L5 for instance in case of GPS).

The phase measurements may comprise or consist of code-phase measurements. The phase measurements may additionally comprise carrier phase measurements. In some examples, the phase measurements may comprise or consist of code phase measurements and carrier phase measurements. The phase measurements do not include any range-rate measurements (such as Doppler measurements).

In general, the phase measurements may relate to GNSS signals in a single GNSS constellation, or to GNSS signals in a variety of different GNSS constellations.

The first and second subsets are different (in particular, they are disjoint subsets - they contain no common phase measurements). The GNSS receiver may be configured to make range-rate measurements (such as Doppler measurements) in addition to the phase measurements (such as code phase measurements); however, the GNSS receiver may be configured not to write in the at least one data message any range-rate measurements (e.g. Doppler measurements). That is, the range-rate measurements are not included in the at least one data message for the remote device and are not sent to the remote device. The GNSS receiver may comprise a transmitter configured to transmit the at least one data message to the remote device for processing to calculate a position fix. Alternatively, the GNSS receiver may be configured to output the at least one data message to a transmitter that is external to the GNSS receiver. In some examples, the transmitter may be configured to transmit the first bits and second bits directly to the remote device, without intermediary. In other examples, the transmitter may be configured to transmit the first bits and second bits to the remote device indirectly, via one or more other devices and/or one or more networks.

The transmitter is generally a wireless transmitter, typically a radio frequency (RF) transmitter. The transmitter may be provided by a transceiver of a wireless infrastructure network. For example, the transmitter may be provided by a cellular modem for a 3GPPcompliant cellular communications network - for example, a 2G, 3G, 4G/LTE or 5G cellular communications network, or a low-power wide-area network (LPWAN) such as a narrowband internet of things (NB-IoT) network or a LoRa network or a Sigfox network or a non-terrestrial network based on LEO/MEO/GEO satellites.

The GNSS receiver may further comprise an RF front-end. The RF front-end may be configured to receive GNSS signals via an antenna. The signal processing unit may be configured to make GNSS measurements (code phase measurements and optionally carrier phase measurements) on the GNSS signals received by the RF front-end.

The processing at the remote device may comprise processing the phase measurements to calculate a position fix - typically with the support of GNSS assistance data.

The first subset may comprise at least four phase measurements. In some examples, the first subset may comprise at least five (in some examples, exactly five) phase measurements. Knowing the coarse position of the GNSS receiver with an accuracy within 150km, five code phases are usually sufficient to establish the position to a moderate position uncertainty (for example, to within 150 m). Four code phases may be sufficient to do this if the time is known accurately - in particular, if a 1 ms coarse timing ambiguity has been resolved by the GNSS receiver when calculating a recent position fix. In other examples, the first subset may comprise at least six, seven, or eight phase measurements.

The first subset may contain fewer than 15, 12, 10, 8, 7, 6 or 5 phase measurements. The first subset may consist of a fixed number of phase measurements. All combinations of the foregoing upper and lower limits on the number of phase measurements are hereby disclosed.

The first subset may comprise phase measurements from at least four or at least five GNSS satellites in the same constellation, or in the same GNSS band (e.g. L1, or L2, etc.), or both (that is, in the same band and from the same constellation).

The second subset may comprise or consist of the remainder of the plurality of phase measurements, or may comprise or consist of up to a fixed number of phase measurements. In the most general case, the second subset may be made up of one or more measurements from any combination of GNSS constellations. However, different conditions may apply to different combinations of measurements. It may be advantageous to avoid isolated measurements from GNSS constellations - that is, a single measurement in the second subset from a constellation that is not otherwise represented anywhere in the first or second subsets. This is because integrating a single isolated measurement from a different constellation would require knowledge of the precise time offset between the constellations. If this time offset information is available to the remote device (e.g. via suitable assistance data), then "isolated" measurements can be accommodated in the second subset. Otherwise, for a constellation that is not represented at all in the first subset, the second subset should preferably include at least two measurements. If a constellation is already represented in the first subset, then it is feasible to include a single additional phase measurement for that constellation in the second subset. In both of the two latter cases, the time-offset problem can be eliminated by forming within-constellation differences between the measurements. (Such differencing is impossible in the case of isolated measurements.)

In some examples, each phase measurement made by the signal processing unit is categorised as belonging to either the first subset or the second subset.

The first bits may describe an integer number of chips and a fractional chip of a spreading code of the respective GNSS signal. In addition, or as an alternative, the second bits may comprise or consist of the least significant bits describing the lowest part of the fractional chip of the spreading code of the respective GNSS signal.

Here "lowest" refers to the portion of the fractional chip that has the finest granularity (respectively, the highest resolution). In general, the second bits need not completely describe the fractional chip. That is, at least some of the bits describing the fractional chip may be omitted from the second bits. The omitted bits describe a portion of the fractional chip having coarser granularity / lower resolution than the second bits.

The total quantity of data transmitted by the GNSS receiver, to enable the remote device to calculate one position fix, may be less than 100 bytes, optionally 12 to 50 bytes.

The at least one processor may be configured to: obtain at least one quality indicator associated with each phase measurement; and select, as the first subset, the phase measurements having the highest quality, according to the at least one quality indicator.

The at least one quality indicator quantifies the quality of the respective measurement. In particular, it may quantify or be correlated (directly or inversely) with signal distortion. Suitable quality indicators can include but are not limited to: carrier-to-noise power ratio, carrier-to-noise time variance, carrier-to-noise density, carrier-to-noise density variability, carrier phase variance, code-phase deviation, frequency deviation, a measure of multipath, loss-of-lock detection, code lock time and phase lock time and satellite elevation and satellite azimuth if a GNSS almanac is available, either decoded from satellite signals or obtained via GNSS assistance data. The measure of multipath may be based on a shape of a correlation function associated with the GNSS signal.

The ranking of the phase measurements, so the quality of each phase measurement, may be based on a single quality indicator or on a combination of different quality indicators or on predefined preferences or rules in conjunction with a single quality indicator or a combination of different quality indicators.

The at least one processor may be configured to select the second subset from among the phase measurements remaining after the first subset has been selected. Optionally, the at least one processor may be configured to select, as the second subset, the phase measurements having the next highest quality, according to the at least one quality indicator.

Here, the "next highest" quality refers to the phase measurements having the highest quality among those remaining after the first subset has been selected. The judgement of quality may be made in the same way (using the same quality indicator or the same combination of quality indicators) as the judgement for the selection of the first subset. Alternatively, the at least one quality indicator may comprise two or more quality indicators. In this case, the first subset may be selected according to one quality indicator, and the second subset may be selected according to another quality indicator.

The at least one processor may be configured to: obtain at least one quality indicator associated with each phase measurement; assess a first quality criterion for some or all of the phase measurements, wherein the quality criterion is based at least in part on the quality indicators; and responsive to the first quality criterion being satisfied, proceeding to output the at least one data message.

In this way, the at least one data message is only output by the processor if the first quality criterion is met. In some examples, the first quality criterion is based on at least the phase measurements in the first subset. In some examples, it is based on only the phase measurements in the first subset. The at least one processor may be configured to, responsive to the first quality criterion not being met, abort the output of the at least one data message. Optionally, in this case, the processor need not even construct the at least one data message - that is, the processor may be configured not to write the first and second bits to the at least one data message, when the first quality criterion is not met.

The first quality criterion may define a threshold in the at least one quality indicator used for ranking of the phase measurements and only if the phase measurements in the first subset are above the threshold, the at least one data message is generated in output. The first quality criterion may be based on a single quality indicator of the phase measurements or on a combination of different quality indicators, or on predefined preferences or rules in conjunction with a single quality indicator or a combination of different quality indicators.

The signal processing unit may be configured to make a plurality of second phase measurements at a second epoch, each second phase measurement being made from a respective different GNSS signal. The at least one processor may be configured to: obtain at least one second quality indicator associated with each second phase measurement; assess a second quality criterion for some or all of the second phase measurements, wherein the second quality criterion is based at least in part on the second quality indicators; and responsive to the second quality criterion not being satisfied, suppressing the output of a data message for the second epoch.

In some cases, the processor may attempt to calculate a position fix based on the second phase measurements. This may be done responsive to the second quality criterion not being satisfied, and optionally responsive to further checks being satisfied or not satisfied. For example, before attempting to calculate the position fix, the processor may first check the availability of assistance data necessary to attempt the calculation. It may also check whether a sufficient number of measurements is present in the second subset to justify the power consumption associated with the attempt to calculate a position fix. If the second subset is empty, or very small (for example, just one or two measurements) then the expected level of accuracy might not justify the power consumption that will be expended by the processor in the attempt. If the processor determines that the conditions for attempting to calculate a position fix are not met, it may do nothing.

With this approach, at the second epoch, the GNSS receiver does not output the at least one data message and does not transmit the second phase measurements to the remote device for processing to calculate a position fix. Instead, in some examples, in some circumstances, because the quality criterion is not satisfied for this epoch, the GNSS receiver attempts to calculate the position fix itself (optionally using Doppler measurements, and GNSS assistance data if available). This can help to avoid a situation in which a minimal set of phase measurement data (that is, the first bits and second bits discussed above) is transmitted to the remote device, only for the remote device to discover that a position fix cannot be calculated from this data, because the quality of the measurement data was too low.

The at least one processor may be configured to: select a first subset of the second phase measurements and select a second subset of the second phase measurements, in any of the same ways as summarised above. In some examples, the second quality criterion may be based on the second quality indicators associated with the second phase measurements in at least the first subset (or in only the first subset). The second quality criterion might not be based on the second quality indicators associated with the second phase measurements in the second subset. In some examples, the second quality criterion may be the same as the first quality criterion.

The at least one processor may be further configured to: for each second phase measurement of the first subset, write first bits of the second phase measurement to at least one second data message for transmission to the remote device; and, for each second phase measurement of the second subset, write second bits of the second phase measurement to the at least one second data message. In some examples, this may be done responsive to the second quality criterion being satisfied. Alternatively, in some examples, it may be done in all cases. (However, it should be understood that the data message is not output unless the second quality criterion is satisfied.) The first bits may include a coarse part and a fine part of the respective second phase measurement. The second bits may describe at least a portion of the fine part and none of the coarse part of the respective second phase measurement.

Thus, the GNSS receiver is configured to write phase measurements to the at least one data message for transmission to the remote device for processing, provided that a quality criterion is met. In the case that the quality criterion is not met, the GNSS receiver is configured not to write (or at least not to output) the data message. In some cases, it may be configured instead to attempt to calculate a position fix itself. This reduces the risk that the remote device receives a set of phase measurements from which the remote device cannot calculate a position fix. Transmitting measurements for remote processing only if they meet certain minimum quality criteria (based at least in part on the quality indicators associated with the measurements) increases the likelihood that it is possible to calculate a position fix at the remote device. Meanwhile, attempting to calculate a position fix at the GNSS receiver itself, when the phase measurements do not meet the necessary quality criterion to send to the remote device, helps to provide a position fix in as many instances as possible. (Ultimately, it may be possible to calculate a position fix even from phase measurements that are indicated by the quality indicators to be of low quality - for instance, by collecting multiple epochs of data and/or decoding the navigation data messages and/or accessing assistance data.)

The at least one processor may be configured to apply a cryptographic signature to the first bits and second bits, and to write the cryptographic signature to the at least one data message for transmission to a remote device for processing.

The at least one processor may be configured to write to the at least one data message, with the first bits and the second bits, at least one of: a value of a monotonic counter maintained by the at least one processor; and a timestamp according to a local clock of the GNSS receiver.

The timestamp may comprise a GNSS time or a UTC time, for example. The monotonic counter may be incremented (or decremented) periodically by the processor, such that successive epochs are associated with different values of the monotonic counter. The monotonic counter may comprise at least 8 bits, optionally 16 bits or more to uniquely identify at least 256 epochs, optionally 65536 or more epochs.

The GNSS receiver may be configured to send the first and second bits to the remote device immediately after making the plurality of phase measurements. In this case, the first and second bits may be transmitted with the value of the monotonic counter. Including the value of the monotonic counter in the transmission may help to make "replay" attacks more difficult. In a replay attack, a malicious third-party intercepts the transmission of the first and second bits from the GNSS receiver to the remote device, and replays this transmission to the remote device at a later time or impersonating a different GNSS receiver. If successful, such an attack may cause the remote device to attribute the calculated position fix to the wrong time or to the wrong GNSS receiver. The monotonic counter can be used by the remote device to help detect replay attacks. In particular, if the remote device receives a transmission with an invalid value of the monotonic counter, it can infer that a replay attack is occurring. For an increasing monotonic counter, any value less than or equal to the previously received value is invalid. For a decreasing monotonic counter any value greater than or equal to the previously received value is invalid. In other words, invalid values are those that are antecedent to, or identical to, the previously received value.

Alternatively, the GNSS receiver may be configured to send the first and second bits to the remote device following an intentional delay after making the plurality of phase measurements. (The intentional delay may be at least 10 seconds, at least 10 minutes, or at least 10 hours.) In this case, the first and second bits may be transmitted with the timestamp. The timestamp can assist the remote device with the (retrospective) calculation of the position fix. For example, the remote device may calculate the position fix using historical ephemerides from the time defined by the timestamp. The timestamp can also help to protect against replay attacks, in a similar manner to the monotonic counter value.

As an alternative to, or in addition to, applying the cryptographic signature to the first bits and second bits, the processor may be configured to apply the cryptographic signature to the value of the monotonic counter and/or to the timestamp. This may help to further secure the system against replay attacks. If a malicious third-party attempts to forge the value of the monotonic counter, or the timestamp, in a transmission to the remote device, the authentication of the cryptographic signature at the remote device will fail.

Also provided is a method of gathering GNSS measurements and writing at least one data message for transmission to a remote device for processing, comprising:

> obtaining a plurality of phase measurements, each phase measurement being made from a respective different GNSS signal;
> selecting a first subset of the phase measurements;

selecting a second subset of the phase measurements;
for each phase measurement of the first subset, writing first bits of the phase measurement to the at least one data message;
for each phase measurement of the second subset, writing second bits of the phase measurement to the at least one data message; and
outputting the at least one data message containing at least the first and the second bits,
wherein the first bits include a coarse part and a fine part of the respective phase measurement, and
wherein the second bits describe at least a portion of the fine part of and none of the coarse part of the respective phase measurement.

The method may include any of the steps that the at least one processor is configured to perform, according to the summary above. The plurality of phase measurements may be obtained from a signal processing unit of a GNSS receiver.

Also provided is a computer program comprising computer program code configured to cause one or more processors to perform all the steps of a method as summarised above when said computer program is run on said one or more processors.

The one or more processors may comprise or consist of one or more processors of a GNSS receiver. The computer program may be stored on a computer-readable storage medium (optionally non-transitory).

According to a second aspect of the present disclosure, there is provided a method of processing a plurality of phase measurements made at a GNSS receiver, to calculate a position fix, the method comprising:

obtaining a coarse position estimate for the GNSS receiver;
receiving at least one data message comprising at least,

for each phase measurement in a first subset of the plurality of phase measurements, first bits of the phase measurement, and
for each phase measurement in a second subset of the plurality of phase measurements, second bits of the phase measurement;

obtaining GNSS assistance data; and
processing the coarse position estimate, the first bits, the second bits and the GNSS assistance data,
wherein each phase measurement of the plurality of phase measurements was made by the GNSS receiver from a respective different GNSS signal,
wherein the first bits include a coarse part and a fine part of the respective phase measurement, and
wherein the second bits describe at least a portion of the fine part of and none of the coarse part of the respective phase measurement.

The coarse position estimate may be associated with a position uncertainty of less than 150 km, optionally less than 125 km, less than 100 km, or less than 75 km. The position uncertainty associated with the coarse position estimate may be greater than 150 m.

The GNSS assistance data may comprise one or more of: satellite ephemeris data; and correction data, such as correction data characterising the atmosphere-related error (ionospheric and/or tropospheric errors) and/or the satellite-related errors (clock, orbit, bias errors).

The coarse position estimate is not calculated based on range rate measurements made at the same epoch as the plurality of phase measurements. In some examples, the coarse position estimate is not calculated based on any range rate measurements.

The coarse position estimate may be based on at least one of: a previous position estimate calculated for the GNSS receiver; and a known geographical area of operation of the GNSS receiver.

The use of the previous position estimate may be advantageous if it is known that the GNSS receiver will not move, between position fixes, by more than the position uncertainty associated with the coarse position (for example, 150 km). The use of the known geographical area of operation may be advantageous if it is known that the GNSS receiver will always be operated within a certain distance (less than the position uncertainty associated with the coarse position estimate) of a defined location - for example, for a tracking device in a warehouse complex, or on a farm.

The previous position estimate may have been calculated by the GNSS receiver, or by a remote device. The remote device may be the same remote device that is performing the method of processing the phase measurements.

In some examples, the method may further comprise obtaining, from an owner, operator, or user of the GNSS receiver or user of the remote device, an indication of the intended geographical area of operation of the GNSS receiver. The geographical area may be described by using the centroid of the area as the coarse position estimate.

In other examples, the coarse position can be estimated by the remote device using some non-GNSS data provided by the device hosting the GNSS receiver, like WiFi SSIDs or BLE beacons or 3GPP mobile networks CellIDs detected, or inferred from the communication with the device hosting the GNSS receiver, like with the IP Geolocalization.

The method may further comprise: receiving the at least one data message comprising a cryptographic signature associated with the plurality of phase measurements; and verifying the authenticity of the cryptographic signature.

The method may further comprise receiving the at least one data message comprising a temporal sequence marker comprising at least one of: a monotonic counter value produced by the GNSS receiver, associated with the epoch at which the plurality of phase measurements have been made; and a timestamp produced by the GNSS receiver, associated with the epoch at which the plurality of phase measurements have been made, comparing the temporal sequence marker with a previous temporal sequence marker associated with a previous data message obtained from the GNSS receiver, to determine whether the temporal sequence marker is valid or invalid, and responsive to determining that the temporal sequence marker is invalid, detecting a replay attack.

If the temporal sequence is an increasing sequence (for example, a clock timestamp or an incrementing counter), then the temporal sequence marker is invalid if it has a value that is less than or equal to the previous temporal sequence marker. Conversely, if the temporal sequence is a decreasing sequence (for example, a decrementing counter) then the temporal sequence marker is invalid if it has a value that is greater than or equal to the previous temporal sequence marker.

Alternatively or in addition, the method may comprise authenticating the validity of the temporal sequence marker by verifying the authenticity of the cryptographic signature.

Obtaining the coarse position estimate optionally comprises receiving user input of the coarse position estimate. The user input may be received in advance, during a commissioning or setup phase of an asset tracking system.

Also provided is a computer program comprising computer program code configured to cause one or more processors to perform all the steps of a method as summarised above when said computer program is run on said one or more processors. The computer program may be stored on a computer-readable storage medium (optionally non-transitory).

Also provided according to the second aspect of the present disclosure is a remote device configured to perform a method of processing a plurality of phase measurements to calculate a position fix, as summarised above.

Also provided according to the second aspect of the present disclosure is a remote device configured to process a plurality of phase measurements made at a GNSS receiver, to calculate a position fix, the remote device comprising:

> a memory; and
> one or more processors, configured to:

>> obtain a coarse position estimate for the GNSS receiver;
>> obtain GNSS assistance data;
>> receive, at least one data message comprising,

>>> for each phase measurement in a first subset of the plurality of phase measurements, first bits of the phase measurement, and
>>> for each phase measurement in a second subset of the plurality of phase measurements, second bits of the phase measurement; and

>>> process the coarse position estimate, the first bits, and the second bits, and the GNSS assistance data, to calculate the position fix,

> wherein each phase measurement of the plurality of phase measurements was made by the GNSS receiver from a respective different GNSS signal,
> wherein the first bits include a coarse part and a fine part of the respective phase measurement, and
> wherein the second bits describe at least a portion of the fine part of and none of the coarse part of the respective phase measurement.

The remote device may be a computer, for example a server computer. The memory may store a computer program as summarized above.

BRIEF DESCRIPTION OF THE DRAWINGS

The invention will now be described by way of example with reference to the accompanying drawings, in which:

Fig. 1 is a schematic block diagram of a GNSS receiver according to an example;
Fig. 2 is a block diagram showing the GNSS receiver of Fig. 1 in operation in a system according to an example;
Fig. 3 is a flowchart illustrating a method performed by the GNSS receiver of Fig. 1 according to a first example;
Fig. 4 is a flowchart illustrating a method performed by the GNSS receiver according to a second example; and
Fig. 5 is a flowchart illustrating a method performed by a remote server according to an example.

It should be noted that these figures are diagrammatic and not drawn to scale.

DETAILED DESCRIPTION

Reference will now be made in detail to examples according to the present disclosure, which are illustrated in the accompanying drawings. The described examples should not be construed as being limited to the descriptions given in this section. Other examples may have different forms.

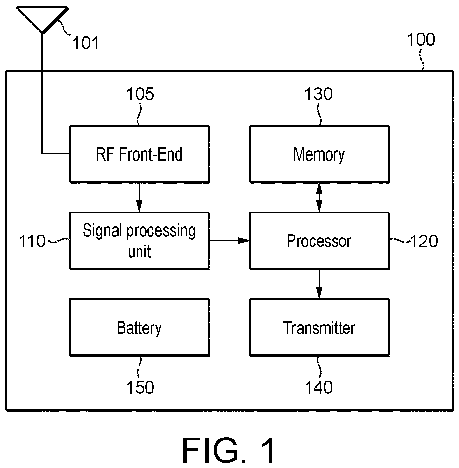

Fig. 1 is a schematic block diagram of a device according to an example. The device comprises a GNSS antenna 101 and a GNSS receiver 100. The GNSS antenna 101 is configured to receive GNSS signals. It may be configured to receive GNSS signals from a single GNSS constellation (for example, GPS), or it may be configured to receive GNSS signals from multiple constellations (for example, GPS, Galileo, GLONASS, and/or BeiDou). Furthermore, it may be configured to receive GNSS signals in a single band (for example L1 for GPS), or it may be configured to receive GNSS signals in multiple bands (for example L1 and L5 for GPS).

The GNSS receiver 100 comprises an RF front-end 105, a signal processing unit 110, a processor 120, a memory 130, a transmitter 140, and a battery 150. The RF front-end 105 is configured to receive GNSS signals via the GNSS antenna 101, and to output them to the signal processing unit 110. The RF front-end 105 is configured to downconvert and digitise the satellite signals received via the antenna 101. The RF front-end essentially conditions the signals for subsequent signal processing. Other typical tasks performed by the front-end include filtering and amplification. The satellite signals received at the RF front-end 105 via the antenna 101 include at least one ranging signal, such as a GPS L1 C/A signal, for each of a plurality of satellites.

The signal processing unit 110 is configured to track the received GNSS signals - in particular, in frequency, delay (code-phase) and carrier phase - and to produce GNSS measurements from the received GNSS signals. It is further configured to generate at least one quality indicator for each GNSS measurement.

The processor 120 is configured to process the GNSS measurements obtained from the signal processing unit 110. While it should be understood that more than one processor may be present within the GNSS receiver 100 for implementing methods according to the present disclosure, for the purposes of the present description it is assumed that there is only one processor 120, as depicted in Fig. 1.

The memory 130 is in communication with the processor 120. The memory 130 is configured to store software/firmware to be executed by the processor 120. The software/firmware is configured to control the processor 120 to carry out a method according to an example. The memory may also be configured to store data that is used as input to the processor 120 and/or to store data that is output by the processor 120.

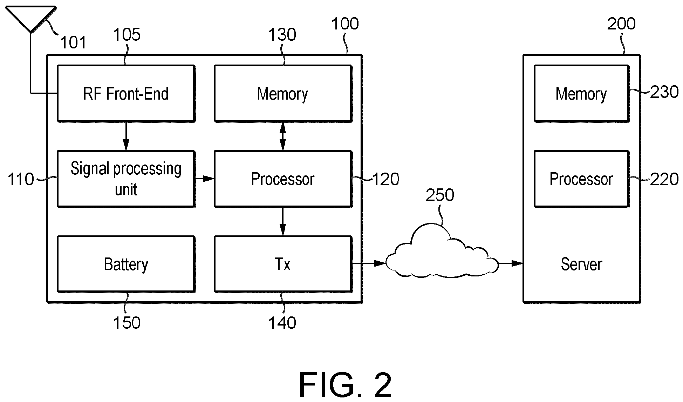

The transmitter is configured to transmit data messages from the GNSS receiver to a remote server 200 (see Fig. 2). The data messages contain raw GNSS measurements, which are passed from the GNSS receiver to the remote server 200, to enable the remote server 200 to calculate the position of the GNSS receiver. In the present example, the transmitter 140 is a cellular modem for a 5G cellular communications network.

The battery 150 provides power for operating each of the other components of the GNSS receiver 100. Examples according to the present disclosure seek to conserve battery power. This helps to minimise the size, weight, and cost of the battery for a given set of user requirements. Conversely, it can help to increase the operating lifetime (or operating time between recharges), for a given battery capacity.

Fig. 2 shows the device of Fig. 1 in use in a system according to an example. The GNSS receiver 100 is shown in communication with a remote server 200, via a network (or networks) 250. The one or more networks 250 may include a cellular data communications network (in the present example, a 5G cellular communications network) and the Internet. The server comprises at least one processor 220 and a memory 230, storing computer program code that runs on the processor.

The server 200 receives the raw GNSS measurements from the GNSS receiver 100, via the one or more networks 250, and calculates (using the processor 220) a position fix for the GNSS receiver based on the measurements. To support this calculation, the server 200 may obtain GNSS assistance data. The GNSS assistance data may include (but is not limited to) any suitable type of assistance data that is known in the art. In the present example, the GNSS assistance data includes satellite ephemeris data (nominal satellite information); and corrections for satellite clock, orbits and biases and ionospheric and tropospheric error. GNSS assistance data can be provided by a third-party data service such as is known in the art. The server 200 may obtain it via the Internet from such a data service (not illustrated in Fig. 2).

By obtaining the assistance data and processing the GNSS measurements at the remote server 200, the power consumption of the GNSS receiver can be reduced, compared with a GNSS receiver that calculates its position itself (optionally obtaining assistance information in order to do so). This model works well for energy constrained Internet of things (IoT) applications, where it is not the IoT device itself that needs to know its position, but rather some remote device or service. An exemplary application is asset-tracking where the position of an IoT device needs to be established a few times a day, and the device operates on a tight power budget, such that it is desirable to minimise the power consumption associated with the positioning function as far as possible.

In some (but not all) examples, the processing power and therefore complexity of the GNSS receiver can be reduced, by calculating positions exclusively in the cloud (that is, exclusively at the remote server 200).

The saving in power consumption obtained by processing the GNSS measurements remotely comes at the cost of that power that is consumed by the transmitter 140 in order to transmit the measurements to the remote server 200. The RF front-end 105 and signal processing unit 110 also need to consume power in order to make the GNSS measurements. It is desirable to minimise the overall power consumed by the GNSS receiver 100, across all of these functions. The power consumed by the RF front-end 105 and signal processing unit 110 can be reduced by shortening the time taken to make the measurements. The power consumed by the transmitter 140 can be reduced by reducing the amount of data to be transmitted. However, it could be expected that reducing the amount of data transmitted would reduce the accuracy of the eventual position fix. For example, it might be expected that reducing the number of GNSS measurements transmitted to the remote server 200 for a single position calculation may reduce the accuracy of the result of that calculation.

It is known to use range rate measurements - for example, Doppler measurements - to calculate a coarse position fix (with the benefit of GNSS assistance data). This coarse position fix (which can be calculated at the remote server 200) can localise the position of the GNSS receiver to within a few kilometres. Provided that the error is no more than 150 km, code phase measurements can then be used to calculate a final position fix based on this coarse position, with greater accuracy. However, this requires both the Doppler measurements and the code phase measurements to be transmitted to the remote server.

The present inventors have recognised that, in many asset-tracking applications, the coarse position of a GNSS receiver does not change by more than 150 km from one position fix to the next. This assumption holds true, for example, when tracking animals on a farm, tracking machinery on a construction site, or tracking a courier van around a city. Indeed, in each of these cases, the position of the GNSS receiver typically does not change by more than 150 km over its whole operational lifetime. In such cases, the coarse position can be defined in advance - for example, by manual user input specifying a street address or even just a geographical region. In other examples, the coarse position could be established by the GNSS receivers through conventional GNSS positioning, in a commissioning phase of an asset tracking system. Devices could localise their positions once, in a configuration mode; thereafter, the coarse position would not change. The coarse position can be reconfirmed each time the remote server calculates a new position fix - setting the coarse position for the next position fix based on the result of the previous position fix.

By taking advantage of knowledge of the coarse position in this way, GNSS receivers 100 according to examples of the present disclosure can avoid the need to transmit range-rate measurements to the remote server 200. Correspondingly, the remote server 200 does not receive range-rate measurements from the GNSS receivers 100 and does not calculate the coarse position based on these measurements. Instead, the remote server 200 obtains the coarse position by other means (for example, as suggested above). Omitting the range-rate measurements from the one or more data messages sent from the GNSS receiver 100 to the server 200 helps to reduce the amount of data that needs to be transmitted. Alternatively, the amount of data transmitted can remain the same, but the content of the data messages can be adapted to increase the accuracy of the resulting position fix.

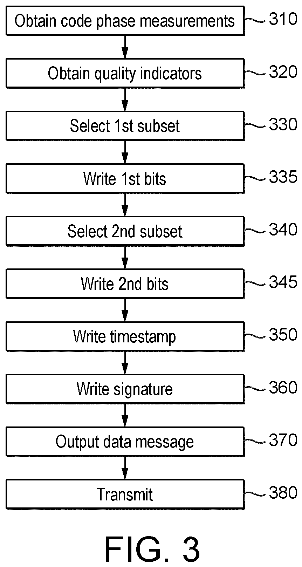

Fig. 3 is a flowchart illustrating a method performed by the GNSS receiver 100 of Fig. 1, according to an example. The inventors have recognised that more efficient use can be made of the data payload of the data messages if different measurements are treated differently. In particular, they have recognised that it may be inefficient for all the measurements to be encoded in the same way, with the same precision, in the data messages. According to the present example, the measurements are code phase measurements. However, similar principles can also be applied to other phase measurements useful in obtaining a GNSS position fix, such as carrier phase measurements.

In step 310, the processor 120 obtains a set of code phase measurements for the current epoch, from the signal processing unit 110. Each code phase measurement relates to a particular signal of a particular satellite in a particular GNSS constellation. Some satellites in some constellations may transmit multiple signals capable of supporting code phase measurements (for example GPS L1 and L5); therefore, not all the code phase measurements necessarily relate to different satellites. GNSS constellations are designed such that multiple satellites from the same constellation are in view at the same time, in clear-sky conditions. However, the actual number of signals from which code phase measurements can be made will vary depending on the signalreception conditions prevailing at the time.

In step 320, the processor obtains at least one quality indicator associated with each code phase measurement. The quality indicators provide a measure of confidence in the code phase measurements. Weak or noisy signals are of lower quality and thus lower confidence. Strongly received and low-noise signals are of higher quality and accordingly higher confidence.

A wide variety of quality indicators can provide useful information about the level of confidence in the code phase measurements. Some quality indicators may be produced by the RF front-end 105 and/or signal processing unit 110 in the course of receiving the satellite signals and making the code phase measurements. One example of such a quality indicator is carrier-to-noise power ratio, which is used as the quality indicator in the present example. Other examples of such quality indicators include (but are not limited to): carrier-to-noise time variance, carrier-to-noise density, carrier-to-noise density variability, carrier phase variance, code-phase deviation, frequency deviation, a measure of multipath, loss-of-lock detection, code lock time and phase lock time. It should be apparent that some of these indicators are directly correlated with quality while others are inversely correlated with quality. For example, high deviation or variance would be indicative of low quality; however, a long lock time would be indicative of high quality.

Other quality indicators may be derived or calculated by the processor 120. These include (but are not limited to): satellite elevation and satellite azimuth. Note that at least GNSS almanac (if not ephemeris) is required, in order to determine the elevation and azimuth of a satellite. Therefore, such quality indicators can only be used if the GNSS receiver has already obtained this data - for example, by decoding a sufficiently long portion of a navigation message from one or more satellites, or through access to GNSS assistance data.

Quality indicators can be used individually or can be combined into an aggregated quality indicator to obtain a ranking algorithm for the code phase measurements. In an alternative example, the selected quality indicator or the aggregated quality indicator can be combined with predefined preferences or rules to obtain the ranking algorithm. This can be done in any suitable way, as desired. The ranking algorithm should ensure that the resulting order of code phase measurements is (directly or inversely) correlated with signal distortion.

In step 330, the processor 120 selects a first subset of the code phase measurements, ranked based on their associated quality indicators. The code phase measurements are ordered from highest to lowest according to their quality indicators (e.g., carrier-to-noise power ratios), and the code phase measurements from the signals with the five highest carrier-to-noise power ratios are selected for inclusion in the first subset. However, according to the present example, signals from the same GNSS constellation are preferred. Therefore, the processor 120 evaluates each GNSS constellation (and GNSS band) separately, to identify the five highest quality signals for each band in each constellation. It then selects, for the first subset, the five signals (in the same band) from the GNSS constellation that achieves the highest average carrier-to-noise power ratio, over the respective five strongest signals of that constellation. If no set of five code phase measurements from the same constellation is found, then the processor, in some implementations, may choose the best available set of four, three, or two code phase measurements from the same constellation. It then populates the remainder of the first subset with the best signals from the next best constellation, and so forth, until five code phase measurements have been selected. In each case (provided at least five code phase measurements were available), the resulting first subset consists of the five code phase measurements that are in some sense the "best" available.

In some examples, the selection process may include some predefined preferences or rules that are not necessarily related to the quality of the measurements - such as generally preferring a specific GNSS constellation over another. However, beyond these predefined preferences or rules the selection includes some attempt to characterise and select those code phase measurements that are expected to be the most accurate and reliable.

In step 335, the processor 120 extracts first bits from each code phase measurement in the first subset and writes these first bits to a data message that is intended for transmission to the remote server 200. The first bits represent a coarse part and a fine part of the respective code phase measurement. The "coarse part" describes the integer number of chips (from the start of the current iteration of the spreading code) and the fine part represents the fractional chip (that is, the fraction of a chip within the current chip). Note that there is no need to write Doppler information in the data message. There is also no need to collect the integer number of spreading-code iterations. This is because the coarse position is already assumed to be known to within $\pm 150$ km (corresponding to around $\pm 0.5$ ms of timing-uncertainty, at the speed of light). The Doppler information and integer number of codes would not add any more accuracy to the positioning solution than this. It will be recalled that, for commercial L1 signals on the GPS, Galileo, GLONASS, and BeiDou constellations, the shortest spreading code duration is 1 ms - which corresponds to a positioning/ranging uncertainty of around 300 km (that is, $\pm 150$ km). For GPS L1 C/A the code duration is 1 ms. The number of chips in 1 ms is 1023; so, a chip represents 293 m. For GLONASS the code duration is 1 ms. The number of chips in 1 ms is 511; so, a chip represents 586 m. For Beidou B11 the code duration is 1 ms. The number of chips in 1 ms is 2046; so, a chip represents 146.5 m. For Galileo E1 the code duration is 4 ms. The number of chips in 1 ms is 1023 (while the number of chips in a code is 4092); so, a chip represents 293 m.

The number of bits that should be included in the first bits depends on the desired accuracy of the eventual position fix. The table below gives examples of possible configurations of first bits for various desired resolutions and GNSS constellations.

**TABLE 1: Selecting the number of first bits**

| Number of bits to represent... | GPS | GLONASS | Galileo | BeiDou |
|---|---|---|---|---|
| Whole number of chips in 1 ms | 10 | 9 | 10 | 11 |
| Fractional chip for a resolution of 5 m | 6 | 7 | 6 | 5 |
| Fractional chip for a resolution of 2.5 m | 7 | 8 | 7 | 6 |
| Fractional chip for a resolution of 1 m | 9 | 10 | 9 | 8 |

In general, the number of bits required for a desired resolution, X, depends on the distance associated with the duration of one chip of the spreading code. For GPS L1 C/A, for instance, one chip corresponds to a distance of 293 m. Consequently, the number of bits, Y, required to represent the fractional chip for a resolution of X m is given by:

$$Y = \left\lceil \log_2 \frac{293}{X} \right\rceil$$

Here, the brackets denote the ceiling function, which rounds up to the nearest integer.

For example, to achieve a resolution of 5 m using the GPS constellation, where the code duration is 1 ms and the code comprises 1023 chips (and so each chip is equivalent to 293m), the first bits should include 16 bits. This is made up of 10 bits for the number of chips as CEIL($\log_2$(1023))=10 and 6 bits for the fractional chip as CEIL($\log_2$(293/5))=6.

In step 340, the processor 120 selects a second subset of the code phase measurements. Again, they are ranked based on the one or more quality indicators associated with each code phase measurement and, in some implementations, in conjunction with predefined preferences or rules. In other words, the second subset is populated with the highest quality code phase measurements that remain after the first subset has been selected, subject to any predefined preferences or rules, where implemented. The same quality indicator (carrier-to-noise power ratio) is used for the selection of the first and second subsets. However, this is not essential - the first subset could be selected using one quality indicator and the second subset could be selected using a different quality indicator. In any event, the second subset would still be chosen from among the code phase measurements that were not selected for inclusion in the first subset. Note that, in some implementations, there may be no preference for signals and satellites in the same constellations, in respect of the second subset - any signal from any constellation is considered for inclusion, regardless of whether there are any other signals in that band and/or from that constellation. This approach may be taken, in particular, when the assistance information available to the remote device includes timing offsets between the GNSS constellations.

The upper limit on the number of code phase measurements included in the second subset may depend on the size of the payload available in the data message to be transmitted and it may be fixed. It may also depend on the desired resolution of the position fix (to be calculated subsequently by the remote server 200). In general, there may be a trade-off between the size of the payload and the positioning accuracy that is possible. For example, according to one implementation, if there are 5 measurements in the first subset, with a resolution of 2.5 m, and if the data message size is 50 bytes, the second subset may contain up to 15 measurements. According to another implementation, if there are 7 measurements in the first subset, with the same resolution and data message size, the second subset may contain up to 12 measurements.

In step 345, the processor 120 extracts second bits from each code phase measurement in the second subset and writes these second bits to the data message. Unlike the first bits (which were used to encode the code phase measurements of the first subset), the second bits do not describe the coarse part of the respective code phase measurement. In the present example, this means that the second bits do not describe the integer number of chips of the spreading code. The inventors have discovered that transmitting the integer number of chips for additional code phase measurements (that is, in addition to those of the first subset) does not significantly improve the positioning accuracy. It is believed that this is because the integer number of chips is effectively redundant information, for these additional code phase measurements. Instead, inventors have found that it is more effective to use the bits of the data message to carry a fine part of the code phase measurements in the second subset. Indeed, according to the present example, the processor does not even write the full fractional chip into the data message. The inventors have found that it is sufficient, and indeed more effective, to include only the "lowest" portion of the fractional part - that is, the least significant bits of the fractional part. In particular, referring again to the GPS example mentioned above, and considering that with the first subset of code phase measurements the position could be fixed with an error below 150 m, the second bits include only the last 5 bits of the fractional chip as CEIL($\log_2$(150/5))=5. These 5 bits are sufficient to get from the 150 m resolution to the desired 5 m resolution. For a resolution of 2.5 m, 6 second bits are required per code phase measurement in the second subset; for a resolution of 1 m, 8 second bits are required.

By omitting the integer number of chips when encoding the code phase measurements of the second subset into the data message, a saving per code phase measurement of between around nine and eleven bits can be achieved for a target resolution between 5m and 1m. As indicated by the table above, this is a significant saving in data payload. Omitting part of the fractional chip from the second bits typically results in a smaller saving in data payload. The reduction (compared with encoding the fractional chip in full) may be 0, 1, or 2 bits per code phase measurement in the second subset. Nevertheless, this apparently small saving can accumulate to a more significant saving over many code phase measurements.

In step 350, the processor writes a timestamp to the data message. This can be useful in at least two ways at the remote server 200. Firstly, the server 200 can use the timestamp to obtain (or retrieve) the correct GNSS assistance data for the epoch involved. Secondly, the server can use the timestamp to detect a replay attack, in which a malicious actor tries to spoof the position of the GNSS receiver by eavesdropping on data messages sent by the GNSS receiver to the server, at a first time, and (re-)sending those data messages to the server 200 at a second, later time. If successful, such an attack would give the appearance that the GNSS receiver was still at the determined position (or had returned to that position). However, when the timestamp is included in the data message, the remote server 200 can see that the code phase measurements are related to a time that is not valid, for instance older than the last code phase measurements processed for the same GNSS receiver - in other words, it can see that it is calculating a historical position of the GNSS receiver rather than a live position.

Although not shown explicitly in the flowchart, additional metadata is typically also included in the data message. For example, the data message may include the identity of the GNSS receiver and the information identifying the constellation, satellite, and band to which each code phase measurement pertains.

In step 360, the processor 120 applies a cryptographic signature to the data message and writes the cryptographic signature to the data message. The signature is applied to the first bits, the second bits and the timestamp. This can enable the remote server 200 to later detect any attempt by a malicious actor to modify any of these elements in order to create a fake/spoofed data message. Many suitable methods for cryptographically signing data are known in the art. Consequently, this step need not be described in further detail here.

In step 370, the processor 120 outputs the data message to the transmitter 140. In step 380, the processor 120 controls the transmitter 140 to transmit the data message to the remote server 200 via the one or more networks 250. It should be understood that the method of Fig. 3 relates to a single position fix, in this example. The method may be repeated periodically, each time the GNSS receiver is scheduled to update the remote server with fresh positioning data.

Although the description of the example above has referred to just one data message, it should be understood that the data may be written to any number of data messages. The size of each data message may be selected according to the characteristics of the one or more networks 250 over which the data is to be transmitted. For example, the data may be divided into multiple data messages such that the size of each message matches a packet size used in the one or more networks 250.

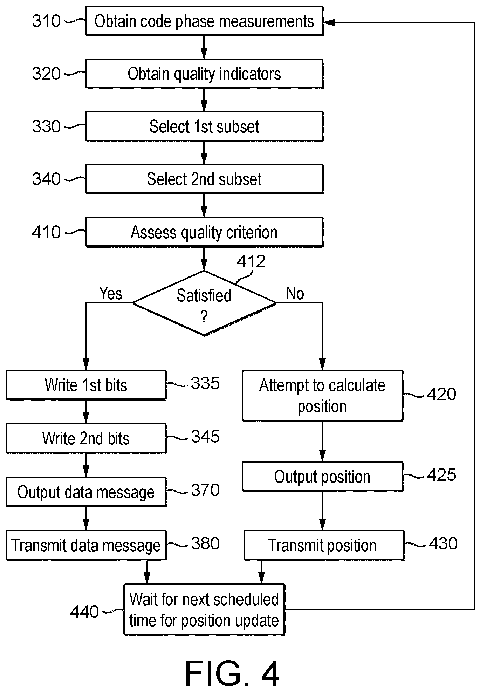

Fig. 4 illustrates a method that can be performed by the GNSS receiver 100 according to another example. Steps 310, 320, 330, 335, 340, 345, 370 and 380 are identical to the same steps described above with reference to Fig. 3. For brevity, the description of the individual steps will not be repeated. However, it will be noted that some of the steps are performed in an order that differs from that of Fig. 3.

As in Fig. 3, the method begins with step 310, in which the processor obtains a plurality of code phase measurements from the signal processing unit 110, and step 320, in which the processor obtains one or more quality indicators associated with each code phase measurement. Next, in step 330, the processor selects the first subset of the code phase measurements. However, in this version of the method, the processor does not yet write the first bits to the data message. Instead, the processor proceeds directly to step 340, in which it selects the second subset of the code phase measurements.

At this point, having identified the first and second subsets of the code phase measurements, the processor 120 assesses a quality criterion at least for the first subset of the code phase measurements, in step 410. The purpose of this step is to predict whether at least the selected first subset of the code phase measurements will be adequate to enable the remote server 200 to calculate a position fix. There is always a risk that a position fix cannot be calculated from the measurements transmitted to the server - for example, because of errors in the measurements. The present example seeks to reduce this risk, by attempting to assess in advance whether the measurements to be transmitted are sufficient to support a successful position calculation. In the present example, this is done based on the one or more quality indicators associated with each measurement. If the aggregate quality of the signal/measurements - as judged by the quality indicators - is sufficiently high, then there is a reasonably high likelihood that it will be possible to calculate the position fix. Nevertheless, it is desirable that the assessment of the quality criterion in step 410 does not significantly add to the cost in terms of power consumption, since this could reduce the overall benefit of the method to some extent.

Continuing from the example described above, the quality criterion could be assessed, in step 410, by comparing the minimum carrier-to-noise power ratio, over the ranked code phase measurements, to a threshold. If at least one of the code phase measurements in the first subset is below the threshold, this may indicate that the ranked code phase measurements include potentially unreliable measurements. In a similar manner to the step 320 of obtaining the quality indicators, the quality criterion may be assessed 410 based on the quality indicators in a variety of ways. In principle, any quality criterion that correlates with success or failure of the positioning calculation could be used.

According to the present example, the quality criterion is assessed 410 based on the code phase measurements in the first subset alone. This approach is adopted because the first subset is ultimately responsible for providing the minimum information necessary to support a successful position fix. If the data in the first subset is unreliable, then it is doubtful that a successful position fix will be possible (irrespective of the quality of the code phase measurements in the second subset, for which only the second bits are transmitted). In the present example, the processor 120 examines the carrier-to-noise power ratio for all the measurements in the first subset that are related to at least four signals in the same band from four different satellites in any one GNSS constellation.

In step 412, the processor 120 determines whether the quality criterion assessed in step 410 is satisfied or not. If the quality criterion is satisfied, then the method can proceed with the remaining steps from the method of Fig. 3. In particular, the processor writes the first and second bits to the data message, in steps 335 and 345, respectively. It outputs the data message to the transmitter 140 in step 370; and the transmitter 140 transmits the data message to the remote server 200, in step 380. (The method can also include steps 350 and 360 at this point, but these are omitted from Fig 4 for simplicity.)

On the other hand, if the processor determines, in step 412, that the quality criterion is not satisfied, it proceeds instead to step 420. (Note that, in some other implementations, the processor may simply do nothing, depending on the GNSS receiver configuration.) In the present example, in the step 420, the processor 120 itself attempts to calculate the position fix using also additional measurements and/or assistance data. Note that this may involve keeping the RF front-end 105 and signal processing unit 120 in a powered-on state for longer, until sufficient information is available calculate the position fix. This information may include additional measurements, including Doppler measurements. It may also include ephemerides, decoded from a sufficiently long segment of the navigation message for each satellite concerned. Alternatively, in some other examples, the GNSS receiver may be able to access GNSS assistance data, which can avoid the need to decode the navigation messages, and may provide the processor with correction data that is not available merely by decoding the navigation messages. The GNSS receiver can obtain the assistance information from a suitable supporting service (in the same manner as the server 200 in the embodiment of Fig. 2). In particular, if the GNSS receiver includes - or is part of, or is incorporated in a module with - a cellular modem, then the GNSS receiver may be able to request and obtain the assistance information via the cellular modem over the Internet.

Assuming the processor 120 successfully calculates a position fix in step 420, it outputs the calculated position in step 425, and controls transmitter 140 to transmit it to the remote server 200, in step 430. In other words, instead of transmitting the data message containing the raw GNSS measurements to server 200 (see step 380), the transmitter 140 transmits the calculated position fix. This helps ensure that the remote server 200 obtains the position of the GNSS receiver (by one means or another) in as many instances as possible. If the attempt to calculate a position fix failed, in step 420, then step 430 is skipped. The transmitter could either transmit a message to notify the server of the failure or could simply transmit nothing at all.

As indicated in the flowchart of Fig. 4, after the transmission of the data message (in step 380) or else, if the GNSS receiver is configured for that and where possible, the transmission of the position fix (in step 430), the method proceeds to step 440, at which the processor waits until the next scheduled time for determining the position of the GNSS receiver. The processor 120 may control the RF front-end 105, the signal processing unit 110, and the transmitter 140 to switch to a powered-off or power-saving or standby state during the waiting period, in order to conserve power in the battery 150. When the scheduled time comes, the processor 120 activates the RF front-end, signal processing unit 110, and transmitter 140 once more, and the method proceeds to step 310 again. In this way, different outcomes may arise in different iterations of the method (and correspondingly at different epochs). At some epochs, the signals may be of high quality and the quality criterion may be satisfied, resulting in the first and second bits being written to the data message and the data message being transmitted to the remote server. At other epochs, the signals may be of low quality and the quality criterion might not be satisfied, resulting. if the GNSS receiver is configured for that, in an attempt to calculate the position fix at the GNSS receiver itself.

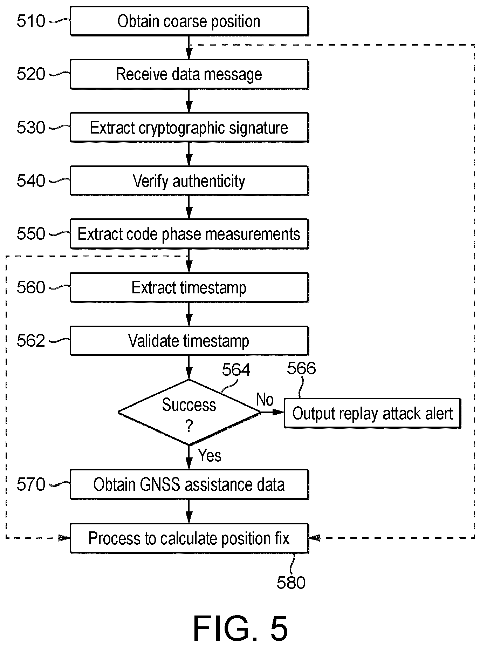

Fig. 5 illustrates a method performed by the processor 220 of the remote server 200 according to an example. In step 510, the processor 220 obtains the coarse position of the GNSS receiver. This is done using one of the methods described previously above - for example, the coarse position may be obtained from the user/customer at the time of commissioning of an asset tracking system of which the GNSS receiver 100 forms a part. Note that, unlike many conventional systems, the coarse position estimate is not derived from range-rate measurements (for example, Doppler measurements). The coarse position estimate may be defined in conventional geographic coordinates - for example, by a latitude and a longitude. Alternatively, in some examples, it may be defined using a grid system. The grid may divide the respective area of operation (potentially the whole world) into overlapping area units each having a radius (or comparable dimension) of 150 km. For example, the grid may contain hexagons, having an apothem equal to 150 km, with an overlap of at least 100 km in each direction. This ensures that several hexagons are always available for a given latitude and longitude.

In step 520, the processor 220 receives the data message (or data messages) transmitted by the GNSS receiver 100 to the remote server 200 via the one or more networks 250. In step 530, the processor 220 extracts the cryptographic signature that was applied and written to the data message by the GNSS receiver 100 in step 360. Next, in step 540, the processor verifies the authenticity of the cryptographic signature. Many suitable cryptographic algorithms for verifying the authenticity of signed messages are known in the art. Consequently, this step need not be described in any further detail. If the authenticity of the signature cannot be verified successfully, the processor 220 may determine that possible attempted spoofing attack has been identified.

Provided the authenticity is verified successfully in step 540, the method proceeds to step 550, in which the processor 220 extracts the code phase measurements from the data message. This includes the measurements of the first subset and the second subset - that is, it includes the first bits and the second bits. In step 560, the processor 220 extracts the timestamp from the data message. It may use this in the subsequent step, step 570, of obtaining GNSS assistance data with which to process the code phase measurements. This is useful, in particular, in usage scenarios in which the raw measurements are not transmitted to the server 200 as soon as they are made, but rather are transmitted with an intentional delay, which may be of the order of seconds, minutes, hours, days, or weeks. In this case, the processor 220 can use the timestamp to look up "historical" GNSS assistance data that was contemporaneous with the timestamp. That is, the processor may access a database of historical GNSS assistance data, which includes multiple instances of assistance data indexed by respective timestamps. The processor selects the assistance data in the database that has the timestamp that corresponds most closely to the timestamp of the data message. It should be understood that, if the measurements are transmitted to the server 200 immediately when they are made, there may be no need for the timestamp and no need for the database of historical GNSS assistance data. This is because the measurements will always correspond to the most up to date version of the assistance data.

Optionally, in step 562, the processor 220 may validate the timestamp extracted in step 560. In one example, this involves comparing the timestamp against a previously received timestamp. Successive timestamps should always progress forward in time. That is, a timestamp that is received at the server 200 earlier should relate to an earlier time at the GNSS receiver 100, and a timestamp that is received later at the server 200 should relate to a later time at the GNSS receiver 100. In step 564, the processor 220 examines the result of the comparison in step 562. If the timestamp is not validated successfully - that is, if the timestamp relates to a time that is not later than the previously received timestamp - then the method proceeds to step 566, in which the processor 220 declares detection of a replay attack, for instance in the form of an alert. In a replay attack, a malicious actor intercepts a data message and presents it to the server at a later time, in an attempt to trick the server into believing that the GNSS receiver is at a spurious (old) position.

On the other hand, if the timestamp is validated successfully, the method continues to step 570. In step 570, the processor 220 obtains the GNSS assistance data, in the manner discussed already above.

Finally, in step 580, the processor 220 calculates the position of the GNSS receiver at the time the measurements were made. It does this using the coarse position estimate obtained in step 510, the code phase measurements extracted from the data message in step 550, and the assistance data obtained in step 570. The dashed arrows indicate the flow of information (that is, the coarse position and code phases, respectively) from steps 510 and 550 to step 580.

It should be understood that the scope of the present disclosure is not limited to the examples described above. Many variations will be apparent to those skilled in the art, based on the foregoing description.

For instance, as mentioned previously, the GNSS measurements may be encoded in one data message (as in the examples above), or in multiple data messages.

Additionally, although in the examples above the GNSS receiver embedded a timestamp in the data message, in other examples there may be other ways to detect replay attacks. Instead of a timestamp, the GNSS receiver may maintain a monotonic counter (which continually increment or decrement its value). The processor of the GNSS receiver may embed the current value of the monotonic counter in the data message(s). At the remote server, the received counter value can be validated in essentially the same way as the timestamp in the example above. The processor of the remote server compares the currently received value of the counter with the immediately previously received value. If the currently received value is not subsequent to the previously received value (bearing in mind the direction - increasing or decreasing - of the monotonic counter), then the processor of the remote server detects a replay attack.

In the example of Fig. 4 above, if the quality criterion is not satisfied in step 412, the method proceeds to step 420, in which the processor of the GNSS receiver attempts to calculate a position fix itself. However, this is optional, not essential. In some other examples, the processor might not be capable of calculating (not configured to calculate) a position fix itself. In a simplified example, in response to a failure to satisfy the quality criterion, the processor may do nothing - for example, it may wait for the next scheduled time at which it is supposed to report GNSS measurements to the remote server.

Moreover, even when the GNSS receiver is configured to attempt to calculate a position fix itself, it may test one or more additional criteria (in addition to the test of step 412) before doing so. For example, as mentioned above, the processor may check the availability of ephemeris data. In some circumstances, the processor might only attempt to calculate the position fix if valid ephemerides happen to be available already at the GNSS receiver - for example, from a previously decoded navigation data message. In other circumstances, the processor may attempt to resolve a lack of valid ephemerides by decoding the navigation data message. This may require keeping the GNSS receiver in a powered-on state for longer. The processor may also check the number of measurements in the second subset. If there are no such measurements or the number of them is below a threshold, for example, the processor may decide not to attempt a position fix (on the basis that the resulting position fix would be unlikely to be accurate enough in any event).

In the example described above with reference to Fig. 4, the quality criterion assessed in step 410 was based on carrier-to-noise power ratio. Of course, other quality criteria (or combinations of quality criteria) could be used. By way of example, the carrier-to-noise power ratio associated with each signal could be combined with a respective multipath indicator, to capture complementary information about the quality of the signals. Suitable multipath indicators include, but are not limited to, the variance of the carrier-to-noise power ratio over time. The different quality indicators may be combined in a variety of ways, so as to produce a single defined ranking of the measurements. For example, a weighted linear combination of the indicators could be used. Alternatively, a weighted combination of the squared values of the indicators could be used.

Different quality indicators or combinations of quality indicators may be chosen in different application scenarios, and/or the weighting applied to each quality indicator in a combination of quality indicators may be adjusted according to the application scenario. By way of example, a multipath indicator may be relatively more important in an urban application - for example, tracking a fleet of e-scooters in a city. Accordingly, the multipath indicator may be weighted to give it greater influence than a quality indicator based on the carrier-to-noise power ratio. Meanwhile, in a rural application scenario - for example, tracking of livestock - the multipath indicator may be relatively less important (because multipath is not such a significant confounding factor in the open countryside). Accordingly, in such an application, the multipath indicator may be weighted to give it relatively less influence than the carrier-to-noise power ratio.

The quality indicators discussed above - namely, the multipath indicator and carrier-to-noise power ratio - are quality indicators that can be determined at the GNSS receiver directly from the "raw" received GNSS signals. In particular, they are derivable from characteristics that are measurable by the signal processing unit 110. In some other examples, certain quality indicators may be calculated by the processor 120. The processor 120 may require assistance information in order to complete the calculations. For instance, satellite elevation may offer a useful quality indicator. All else being equal, signals from satellites at higher elevations tend to produce measurements of a higher quality than signals from satellites at low elevations. However, in order to determine satellite elevation, the processor 120 of the GNSS receiver must have at least almanac information available (to know the approximate positions of the satellites). Additionally, some information about the approximate position of the GNSS receiver must be available to the processor, in order to calculate the elevations of the satellites given their approximate positions. This could be based on a previously calculated position. If ephemerides are available, they may be used to calculate the positions of the satellite more accurately. However, typically, almanac data is more likely to be available, because it is transmitted by each satellite in the constellation and has a validity period of weeks - much longer than ephemeris data.

Another potentially useful quality indicator that can be calculated based on almanac or ephemeris data is a measure of dilution of precision (DoP) for the set of satellites whose signals have been measured. Calculation of DoP requires both satellite positions and receiver position to be known, however an indicative measure of DoP may be calculated without reference to the position of the GNSS receiver.

Both individual quality indicators and combinations of quality indicators can also be combined with customer/developer preferences - for example, to pre-select or prefer specific GNSS constellations.

In the examples described above, the processor 120 of the GNSS receiver adopted an approach of: first, ranking the measurements based on the one or more quality indicators; second, populating the first and second subsets based on the ranking; and third, defining a threshold in the one or more quality indicators (in particular, for the first subset) in order to decide whether the overall quality of the set of measurements was sufficient to justify transmitting the set to the remote device. It should be understood that these three steps are not necessarily applied in this order. For instance, in another example, the processor might first apply a threshold (based on the one or more quality indicators) to prune the list of measurements, before then ranking them and selecting the first and second subsets.

In general, the remote server of the examples above may be replaced with another remote device - the processing need not be carried out at a server computer. For example, a user device such as a smart phone or tablet computer could be used in place of the remote server to calculate the position fix.

In the examples above, it was suggested that all of the measurements (in particular, code phase measurements) needed for a given position fix can be measured at the same epoch. This may be advantageous, since it can minimise the length of time that the GNSS receiver needs to be active to support each position fix. When all of the measurements come from a single epoch (or "snapshot"), it may be desirable (or necessary) to include at least five measurements in the first subset. The fifth measurement can then be used at the remote server to disambiguate which code is "seen" in the snapshot. However, this is not an absolute requirement. In other examples according to the present disclosure, the GNSS receiver may detect data bit boundaries and signal their timing to the remote device. The data bit boundaries can usually be identified at the receiver by tracking the respective GNSS signal for a sufficiently long duration. For GPS L1, for instance, given about 6 s of signal tracking, the receiver can identify the data bit boundaries and decode the time-of-week (ToW). In this case, a fifth GNSS measurement might not be necessary to disambiguate the code. Instead, the code can be disambiguated based on the knowledge of the frame and data boundaries in the longer duration of captured signal.

In general, in the flowcharts of Figs. 3-5, the arrows between the steps do not necessarily imply a causal relationship between those steps. They merely indicate one exemplary order in which the steps may be performed. Method steps may be carried out in a different order from the exemplary order shown in the drawings.

It should be understood that various components illustrated in Figs. 1-2 may be implemented in hardware, or software, or a mixture of both. Furthermore, some components may be grouped together in a given implementation or may be implemented separately. In the present implementation, block 105 is implemented entirely in hardware, block 110 is implemented partially in hardware, and the remaining components (downstream in the signal processing chain) are implemented in software. Other implementations are possible, which divide and distribute the various functions differently between hardware and software, or between different hardware components, software modules and/or processors running the software.

In the claims, any reference signs placed between parentheses shall not be construed as limiting the claim. The word "comprising" does not exclude the presence of elements or steps other than those listed in a claim. However, where the word "comprising" is used, this also discloses as a special case the possibility that the elements or steps listed are exhaustive - that is, the apparatus or method may consist solely of those elements or steps. The word "a" or "an" preceding an element does not exclude the presence of a plurality of such elements. The embodiments may be implemented by means of hardware comprising several distinct elements. In a device claim enumerating several means, several of these means may be embodied by one and the same item of hardware. The mere fact that certain measures are recited in mutually different dependent claims does not indicate that a combination of these measures cannot be used to advantage. Furthermore, in the appended claims lists comprising "at least one of: A; B; and C" should be interpreted as (A and/or B) and/or C.

In flowcharts, summaries, claims, and descriptions relating to methods, the sequence in which steps are listed is not, in general, intended to be limiting on the order in which they are carried out. The steps may be performed in a different order to that indicated (except where specifically indicated, or where a subsequent step relies on the product of a preceding step). Nevertheless, the order in which the steps are described may in some cases reflect a preferred sequence of operations.

Furthermore, in general, the various embodiments may be implemented in hardware or special purpose circuits, software, logic or any combination thereof. For example, some aspects may be implemented in hardware, while other aspects may be implemented in firmware or software, which may be executed by a controller, microprocessor or other computing device, although these are not limiting examples. While various aspects described herein may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments described herein may be implemented by computer software executable by a data processor of the apparatus, such as in the processor entity, or by hardware, or by a combination of software and hardware. Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, or CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi-core processor architecture, as non-limiting examples.

Embodiments as discussed herein may be practiced in various components such as integrated circuit modules. The design of integrated circuits is generally a highly automated process. Complex and powerful software tools are available for converting a logic level design into a semiconductor circuit design ready to be etched and formed on a semiconductor substrate.

**Claims**

1. A GNSS receiver (100) comprising:

   a signal processing unit (110), configured to make a plurality of phase measurements at a first epoch, each phase measurement being made from a respective different GNSS signal; and
   at least one processor (120), configured to:

   select (330) a first subset of the phase measurements;
   select (340) a second subset of the phase measurements;
   for each phase measurement of the first subset, write (335) first bits of the phase measurement to at least one data message for transmission to a remote device for processing;
   for each phase measurement of the second subset, write (345) second bits of the phase measurement to the at least one data message; and
   output (370) the at least one data message containing at least the first and the second bits,

   wherein the first bits include a coarse part and a fine part of the respective phase measurement, and
   wherein the second bits describe at least a portion of the fine part of and none of the coarse part of the respective phase measurement.

2. The GNSS receiver of claim 1, wherein the first subset comprises at least four phase measurements.

3. The GNSS receiver of claim 1 or claim 2, wherein the first bits describe an integer number of chips and a fractional chip of a spreading code of the respective GNSS signal; and/or
   wherein the second bits comprise or consist of the least significant bits describing the lowest part of the fractional chip of the spreading code of the respective GNSS signal.

4. The GNSS receiver of any one of the preceding claims, wherein the at least one processor (120) is configured to:

   obtain (320) at least one quality indicator associated with each phase measurement; and
   select (330), as the first subset, the phase measurements having the highest quality, according to the at least one quality indicator.

5. The GNSS receiver of claim 4, wherein the at least one processor (120) is configured to select (340) the second subset from among the phase measurements remaining after the first subset has been selected,
   wherein the at least one processor is configured to select, as the second subset, the phase measurements having the next highest quality, according to the at least one quality indicator.

6. The GNSS receiver of any one of the preceding claims, wherein the at least one processor is configured to:

   obtain (320) at least one quality indicator associated with each phase measurement;
   assess (410) a first quality criterion for some or all of the phase measurements, wherein the quality criterion is based at least in part on the quality indicators; and
   responsive to the first quality criterion being satisfied (412), proceeding to output (370) the at least one data message.

7. The GNSS receiver of any one of the preceding claims, wherein:

   the signal processing unit (110) is configured to make a plurality of second phase measurements at a second epoch, each second phase measurement being made from a respective different GNSS signal, and
   the at least one processor (120) is configured to:

   obtain (320) at least one second quality indicator associated with each second phase measurement;
   assess (410) a second quality criterion for some or all of the second phase measurements, wherein the second quality criterion is based at least in part on the second quality indicators; and
   responsive to the second quality criterion not being satisfied, suppressing the output of a data message for the second epoch.

8. The GNSS receiver of any one of the preceding claims, wherein the at least one processor (120) is configured to apply a cryptographic signature to the first bits and second bits, and to write (360) the cryptographic signature to the at least one data message for transmission to a remote device for processing.

9. The GNSS receiver of any one of the preceding claims, wherein the at least one processor (120) is configured to write (350) to the at least one data message, with the first bits and the second bits, at least one of:

> a value of a monotonic counter maintained by the at least one processor; and
> a timestamp according to a local clock of the GNSS receiver.

10. A method of processing a plurality of phase measurements made at a GNSS receiver (100), to calculate a position fix, the method comprising:

> obtaining (510) a coarse position estimate for the GNSS receiver;
> receiving (520) at least one data message comprising at least,
>
>> for each phase measurement in a first subset of the plurality of phase measurements, first bits of the phase measurement, and
>> for each phase measurement in a second subset of the plurality of phase measurements, second bits of the phase measurement;
>
> obtaining (570) GNSS assistance data; and
> processing (580) the coarse position estimate, the first bits, the second bits and the GNSS assistance data,
> wherein each phase measurement of the plurality of phase measurements was made by the GNSS receiver from a respective different GNSS signal,
> wherein the first bits include a coarse part and a fine part of the respective phase measurement, and
> wherein the second bits describe at least a portion of the fine part of and none of the coarse part of the respective phase measurement.

11. The method of claim 10, wherein the coarse position estimate is based on at least one of:

> a previous position estimate calculated for the GNSS receiver; and
> a known geographical area of operation of the GNSS receiver.

12. The method of claim 10 or claim 11, further comprising:

> receiving (520) the at least one data message comprising a cryptographic signature associated with the plurality of phase measurements; and
> verifying (540) the authenticity of the cryptographic signature.

13. The method of any one of claims 10-12, further comprising:

> receiving (520) the at least one data message comprising a temporal sequence marker comprising at least one of:
>
>> a monotonic counter value produced by the GNSS receiver, associated with the epoch at which the plurality of phase measurements have been made; and
>> a timestamp produced by the GNSS receiver, associated with the epoch at which the plurality of phase measurements have been made,
>
> comparing (562) the temporal sequence marker with a previous temporal sequence marker associated with a previous data message obtained from the GNSS receiver, to determine whether the temporal sequence marker is valid or invalid, and
> responsive to determining that the temporal sequence marker is invalid, detecting (566) a replay attack.

14. The method of any one of claims 10-13, wherein obtaining the coarse position estimate comprises receiving user input of the coarse position estimate.

15. A computer program comprising computer program code configured to cause one or more processors to perform all the steps of the method as claimed in any one of claims 10-14 when said computer program is run on said one or more processors.

EP 4 357 815 A1

FIG. 1

21

FIG. 2

Obtain code phase measurements ~310

Obtain quality indicators ~320

Select 1st subset ~330

Write 1st bits ~335

Select 2nd subset ~340

Write 2nd bits ~345

Write timestamp ~350

Write signature ~360

Output data message ~370

Transmit ~380

# FIG. 3

310 — Obtain code phase measurements

320 — Obtain quality indicators

330 — Select 1st subset

340 — Select 2nd subset

410 — Assess quality criterion

412

Satisfied ?

Yes

Write 1st bits — 335

Write 2nd bits — 345

Output data message — 370

Transmit data message — 380

No

Attempt to calculate position — 420

Output position — 425

Transmit position — 430

440 — Wait for next scheduled time for position update

# FIG. 4

510 — Obtain coarse position

520 — Receive data message

530 — Extract cryptographic signature

540 — Verify authenticity

550 — Extract code phase measurements

560 — Extract timestamp

562 — Validate timestamp

564    566

Success ? →No→ Output replay attack alert

Yes

570 — Obtain GNSS assistance data

Process to calculate position fix

580

# FIG. 5

Europäisches
Patentamt

European
Patent Office

Office européen
des brevets

# EUROPEAN SEARCH REPORT

**Application Number**

EP 22 20 2855

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | WO 2018/083160 A1 (UBISCALE [FR])<br>11 May 2018 (2018-05-11)<br>* abstract *<br>* page 1, line 5 – line 8 *<br>* page 3, line 1 – page 36, line 6 *<br>* page 40, line 3 – page 45, line 23 *<br>* page 50, line 13 – page 51, line 19 *<br>* figures 1a, 4a, 5a-5c *<br>----- | 1-3,7-15<br><br>4-6 | INV.<br>G01S19/09<br><br>ADD.<br>G01S19/43<br>G01S19/21 |
| Y<br><br>A | US 2010/302099 A1 (GROSSNICKLE PETER C<br>[US] ET AL) 2 December 2010 (2010-12-02)<br>* figures 3, 12, 16, 22 *<br>* paragraph [0016] – paragraph [0025] *<br>* paragraph [0105] – paragraph [0111] *<br>* paragraph [0129] – paragraph [0134] *<br>* paragraph [0139] – paragraph [0170] *<br>* paragraph [0178] – paragraph [0186] *<br>* claims 1-19 *<br>----- | 4-6<br><br>1-3,7-15 | |
| A | US 2020/322915 A1 (ZHANG XIN [DE] ET AL)<br>8 October 2020 (2020-10-08)<br>* abstract *<br>* figures 5-9 *<br>* paragraph [0021] *<br>* paragraph [0041] – paragraph [0045] *<br>* paragraph [0052] – paragraph [0098] *<br>* paragraph [0111] – paragraph [0169] *<br>* paragraph [0188] *<br>* paragraph [0212] *<br>----- | 1-15 | **TECHNICAL FIELDS SEARCHED (IPC)**<br><br>G01S |
| A | US 10 890 665 B2 (ERICSSON TELEFON AB L M<br>[SE]) 12 January 2021 (2021-01-12)<br>* abstract *<br>* figures 3-5 *<br>* column 2, line 39 – column 4, line 2 *<br>* column 6, line 18 – column 9, line 4 *<br>* column 10, line 19 – line 24 *<br>* column 12, line 56 – line 58 *<br>----- | 1-15 | |

The present search report has been drawn up for all claims

| Place of search | Date of completion of the search | Examiner |
|---|---|---|
| Munich | 24 March 2023 | Haugg, Sabine |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...........................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

**EP 22 20 2855**

This annex lists the patent family members relating to the patent documents cited in the above-mentioned European search report.
The members are as contained in the European Patent Office EDP file on
The European Patent Office is in no way liable for these particulars which are merely given for the purpose of information.

**24-03-2023**

| Patent document cited in search report | | Publication date | Patent family member(s) | | Publication date |
|---|---|---|---|---|---|
| WO 2018083160 | A1 | 11-05-2018 | FR | 3058532 A1 | 11-05-2018 |
| | | | FR | 3058533 A1 | 11-05-2018 |
| | | | WO | 2018083160 A1 | 11-05-2018 |
| US 2010302099 | A1 | 02-12-2010 | NONE | | |
| US 2020322915 | A1 | 08-10-2020 | CA | 3071876 A1 | 14-02-2019 |
| | | | EP | 3665509 A1 | 17-06-2020 |
| | | | US | 2020322915 A1 | 08-10-2020 |
| | | | WO | 2019032036 A1 | 14-02-2019 |
| | | | ZA | 201908410 B | 27-07-2022 |
| US 10890665 | B2 | 12-01-2021 | EP | 3665508 A1 | 17-06-2020 |
| | | | US | 2020081130 A1 | 12-03-2020 |
| | | | WO | 2019032004 A1 | 14-02-2019 |

EPO FORM P0459

For more details about this annex : see Official Journal of the European Patent Office, No. 12/82